# EUROPÄISCHE PATENTANMELDUNG

(11) **EP 1 050 434 A2**
(43) Veröffentlichungstag der Anmeldung: **08.11.2000**
(21) Anmeldenummer: 00107068.9
(22) Anmeldetag: 04.04.2000
(51) Int. Cl.: B60Q 3/04, F21V 8/00

(54) **Anzeige mit einer Beleuchtungseinheit**

(30) Priorität: 06.05.1999 DE 19920917
(71) Anmelder: Mannesmann VDO Aktiengesellschaft, 60388 Frankfurt am Main (DE)
(72) Erfinder: Brandt, Peter, 63739 Aschaffenburg (DE)
(74) Vertreter: Klein, Thomas, Dipl.-Ing.

(57) **Zusammenfassung**

Ein LC-Bildschirm (2) wird über einen Lichtleiter (1) von einer Beleuchtungseinheit (3) durchleuchtet. Diese Beleuchtungseinheit (3) hat eine Leuchtstofflampe (4) und einen dahinter angeordneten Reflektor (5). Der Reflektor (5) ist als elektrischer Heizwiderstand ausgebildet, so daß mit ihm bei niedrigen Temperaturen die Leuchtstofflampe (4) zwecks Erhöhung ihrer Lichtausbeute aufgeheizt werden kann.

## Beschreibung

Die Erfindung betrifft eine Anzeige, insbesondere für ein Kraftfahrzeug, mit einer Beleuchtungseinheit, welche eine Leuchtstofflampe und einen die Leuchtstofflampe teilweise umgebenden Reflektor aufweist.

Anzeigen der vorstehenden Art sind beispielsweise in heutigen Kraftfahrzeugen gebräuchlich und deshalb allgemein bekannt. Mittels des Reflektors wird die Lichtausbeute dadurch erhöht, daß auch Licht, das in nicht zur Beleuchtung vorgesehene Bereiche abgestrahlt wird, ausgenutzt wird. Die Lichtemission von Leuchtstofflampen ist aber von der Umgebungstemperatur und der Betriebstemperatur der Lampe abhängig. Das führt in Kraftfahrzeugen bei niedrigen Temperaturen oftmals zu einer zu geringen Ausleuchtung der Anzeige.

Um die Lichtabstrahlung von Leuchtstofflampen bei niedrigen Umgebungstemperaturen zu erhöhen, ist es bekannt, diese mit einer elektrischen Beheizung in Form einer um die Lampe gewickelten Heizwendel zu versehen. Solche Beheizungen stellen jedoch einen beträchtlichen zusätzlichen Aufwand dar, der bei Anzeigen aus Kostengründen oftmals nicht in Betracht kommt. Zudem verdeckt die Heizwendel Teile der Lampenoberfläche, so daß die Lichtabstrahlung auch in zur Beleuchtung vorgesehene Bereiche vermindert wird.

Der Erfindung liegt das Problem zugrunde, eine Anzeige der eingangs genannten Art so auszubilden, daß eine elektrische Beheizung ihrer Leuchtstofflampe mit möglichst geringem Aufwand verwirklicht wird.

Dieses Problem wird erfindungsgemäß dadurch gelöst, daß der Reflektor als elektrischer Heizwiderstand ausgebildet ist.

Durch diese Gestaltung des Reflektors erhält dieser eine Doppelfunktion und ist Reflektor und Heizung in einem. Der Reflektor ist somit vorteilhaft unmittelbar auch die Heizung, wobei die Heizfunktion durch eine Bestromung des elektrisch leitenden Reflektors erzielt wird. Dadurch ist der Aufwand zu Erzeugung einer Heizung äußerst gering, so daß man mit sehr geringem Mehraufwand eine solche Heizung der Leuchtstofflampe vorsehen kann und dadurch auch bei niedrigen Umgebungstemperaturen eine hohe Lichtausbeute erhält. Deshalb genügt bereits eine relativ geringe elektrische Leistung der Leuchtstofflampe, um eine Anzeige ausreichend zu beleuchten. Diese geringe Leistung hat den Vorteil, daß der Energiebedarf gering ist, was oftmals von großer Bedeutung ist, wenn in einem Kraftfahrzeug die Beleuchtung bei stehendem Motor und deshalb ausschließlich durch die von der Batterie zur Verfügung gestellten Energie erfolgen soll.

Übliche Anzeigen können durch Auswechseln des Reflektors durch einen als Heizwiderstand ausgebildeten Reflektor in erfindungsgemäße Anzeigen umgewandelt werden, wenn gemäß einer vorteilhaften Weiterbildung der Erfindung der Reflektor mit Abstand zu der Leuchtstofflampe angeordnet ist.

Die vom Reflektor erzeugte Wärme gelangt besonders weitgehend in die Leuchtstofflampe, wenn der Reflektor als Beschichtung auf der Leuchtstofflampe aufgebracht ist. Eine solche Ausführungsform ist obendrein ganz besonders kostengünstig herstellbar, z.B. durch Aufdampfen einer metallischen Schicht auf die Lampe und anschließendes elektrisches Kontaktieren dieser Schicht.

Eine besonders vorteilhafte Weiterbildung der Erfindung ist auch dann gegeben, wenn die Anzeige einen LC-Bildschirm aufweist. LC-Bildschirme sind zum einen in großen Serien kostengünstig herstellbar und damit für Kfz-Anwendungen gut geeignet; zum anderen weisen sie eine große zu beleuchtende Fläche auf, für deren Ausleuchtung gerade Leuchtstoffröhren sehr gute Voraussetzungen bieten.

Wenn die Beleuchtungsstärke der Anzeige veränderbar oder automatisch auch bei unterschiedlichen Umgebungstemperaturen auf einem konstanten Wert gehalten werden soll, dann kann man gemäß einer anderen Weiterbildung der Erfindung vorzugsweise vorsehen, daß zwischen der Leuchtstofflampe und dem LC-Bildschirm der Anzeige eine Flüssigkristallzelle als Dimmer angeordnet ist.

Die erfindungsgemäße Anzeige kann besonders flach ausgebildet werden, wenn der LC-Bildschirm vor einer Breitseite eines Lichtleiters und die Beleuchtungseinheit vor einer Schmalseite des Lichtleiters angeordnet ist.

Die als Dimmer dienende Flüssigkristallzelle kann besonders kleinflächig ausgebildet werden, wenn die Flüssigkristallzelle als Dimmer zwischen der Leuchtstofflampe und der Schmalseite des Lichtleiters angeordnet ist.

Eine besonders gute Ausleuchtung des LC-Bildschirmes erhält man, wenn an zwei gegenüberliegenden Schmalseiten des Lichtleiters jeweils eine Beleuchtungseinheit angeordnet ist.

Die von der Beleuchtungseinheit erzeugte Wärme kann bei einer Anzeige mit in etwa horizontal angeordnetem LC-Bildschirm zur Erwärmung des LC-Bildschirmes benutzt werden, wenn die Beleuchtungseinheit unterhalb des LC-Bildschirms angeordnet ist.

Bei kreisförmigen oder kreissektorförmigen Anzeigen ergibt sich eine besonders gleichmäßige Ausleuchtung, wenn die Beleuchtungseinheit den Lichtleiter zumindest teilweise bogenförmig umgibt.

Die Erfindung läßt zahlreiche Ausführungsformen zu. Zur weiteren Verdeutlichung ihres Grundprinzips sind drei davon schematisch in der Zeichnung dargestellt und werden nachfolgend beschrieben. Die Zeichnung zeigt in
- Figur 1: eine Explosionsdarstellung einer ersten Ausführungsform einer Anzeige nach der Erfindung,
- Figur 2: einen Schnitt durch eine zweite Ausführungsform einer Anzeige nach der Erfindung,
- Figur 3: einen Schnitt durch eine erfindungsgemäße Leuchtstofflampe mit Reflektor.

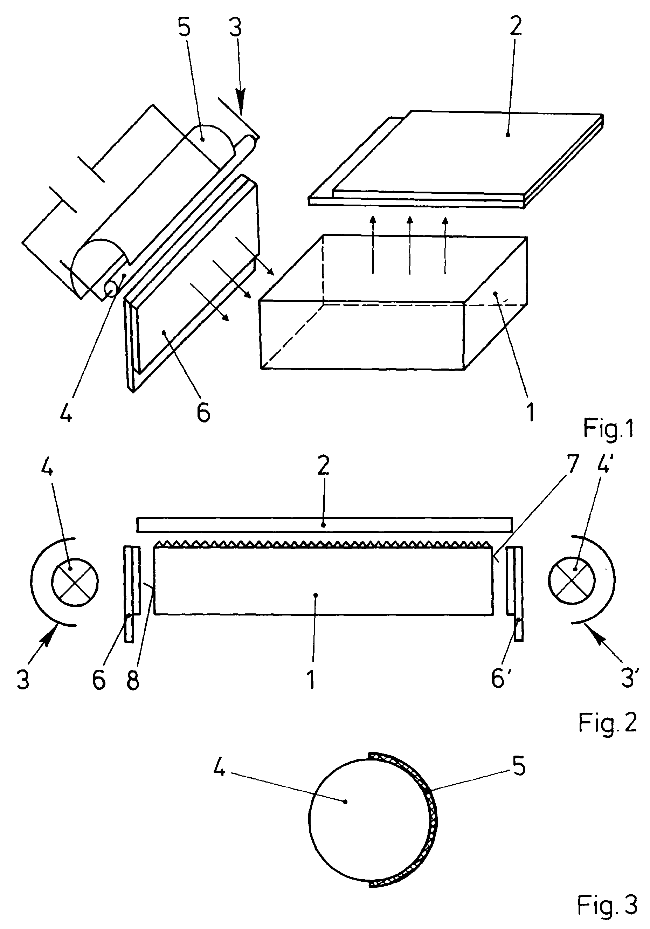

Die Figur 1 zeigt oberhalb eines rechteckig ausgebildeten Lichtleiters 1 einen LC-Bildschirm 2 eines hier nicht weiter dargestellten Kombinationsinstrumentes eines Kraftfahrzeugs. Zur Beleuchtung dieses LC-Bildschirmes 2 dient eine seitlich des Lichtleiters 1 angeordnete Beleuchtungseinheit 3. Diese hat eine Leuchtstofflampe 4, hinter der ein Reflektor 5 angeordnet ist. Wichtig für die Erfindung ist, daß dieser Reflektor 5 als Heizwiderstand ausgebildet ist, so daß er sich bei Bestromung erwärmt und seine Wärme teilweise in die Leuchtstofflampe 4 gelangt. Dadurch kann man bei niedrigen Temperaturen die Lichtemission der Leuchtstofflampe 4 erhöhen.

Die Figur 1 zeigt zusätzlich, daß zwischen der Leuchtstofflampe 4 und dem Lichtleiter 1 eine Flüssigkristallzelle 6 angeordnet ist. Diese Flüssigkristallzelle 6 verändert je nach angelegter Spannung ihre Lichtdurchlässigkeit und wirkt deshalb als Dimmer.

Bei der Ausführungsform nach Figur 2 ist wiederum ein rechteckiger Lichtleiter 1 vorgesehen. Vor seiner Breitseite ist der LC-Bildschirm 2 angeordnet. Vor seinen beiden gegenüberliegenden Schmalseiten 7, 8 befindet sich jeweils eine eigene Beleuchtungseinheit 3, 3'. Genau wie bei dem zuvor beschriebenen Ausführungsbeispiel ist zwischen jeder Leuchtstofflampe 4 bzw. 4' die Flüssigkristallzelle 6, 6' angeordnet.

Die Figur 3 zeigt, daß der Reflektor 5 auch unmittelbar auf der Leuchtstofflampe 4 in Form einer Beschichtung aufgebracht sein kann. Die von ihm erzeugte Wärme gelangt dann besonders vollständig in die Leuchtstofflampe 4.

## Patentansprüche

1. Anzeige, insbesondere für ein Kraftfahrzeug, mit einer Beleuchtungseinheit, welche eine Leuchtstofflampe und einen die Leuchtstofflampe teilweise umgebenden Reflektor aufweist, **dadurch gekennzeichnet**, daß der Reflektor (5) als elektrischer Heizwiderstand ausgebildet ist.

2. Anzeige nach Anspruch 1, **dadurch gekennzeichnet**, daß der Reflektor (5) mit Abstand zu der Leuchtstofflampe (4) angeordnet ist.

3. Anzeige nach Anspruch 1, **dadurch gekennzeichnet**, daß der Reflektor (5) als Beschichtung auf der Leuchtstofflampe (4) aufgebracht ist.

4. Anzeige nach einem der vorangehenden Ansprüche, **dadurch gekennzeichnet**, daß die Anzeige einen LC-Bildschirm (2) aufweist.

5. Anzeige nach Anspruch 4, **dadurch gekennzeichnet**, daß zwischen der Leuchtstofflampe (4) und dem LC-Bildschirm (2) der Anzeige eine Flüssigkristallzelle (6) als Dimmer angeordnet ist.

6. Anzeige nach Anspruch 4 oder 5, **dadurch gekennzeichnet**, daß der LC-Bildschirm (2) vor einer Breitseite eines Lichtleiters (1) und die Beleuchtungseinheit (3) vor einer Schmalseite (8) des Lichtleiters (1) angeordnet ist.

7. Anzeige nach einem der vorangehenden Ansprüche, **dadurch gekennzeichnet**, daß die Flüssigkristallzelle (6, 6') als Dimmer zwischen der Leuchtstofflampe (4, 4') und der Schmalseite (7, 8) des Lichtleiters (1) angeordnet ist.

8. Anzeige nach einem der vorangehenden Ansprüche, **dadurch gekennzeichnet**, daß an zwei gegenüberliegenden Schmalseiten (7, 8) des Lichtleiters (1) jeweils eine Beleuchtungseinheit (3, 3') angeordnet ist.

9. Anzeige nach einem der vorangehenden Ansprüche mit einem zumindest in etwa horizontal angeordneten LC-Bildschirm, **dadurch gekennzeichnet**, daß die Beleuchtungseinheit (3) unterhalb des LC-Bildschirms angeordnet ist.

10. Anzeige nach einem der vorangehenden Ansprüche, **dadurch gekennzeichnet**, daß die Beleuchtungseinheit (3) den Lichtleiter (1) zumindest teilweise bogenförmig umgibt.
